# EUROPEAN PATENT APPLICATION

(11) **EP 3 945 078 A1**
(43) Date of publication of application: **02.02.2022**
(21) Application number: 20188557.1
(22) Date of filing: 30.07.2020
(51) Int. Cl.: C03C 1/00, C03C 3/087, C03C 4/02, C03C 10/00, C03C 12/00, C04B 14/22, C04B 26/14, C04B 26/16, C04B 26/18

(54) **A GLASS-CERAMIC MATERIAL, A METHOD OF FORMING A GLASS-CERAMIC MATERIAL AND USES OF A GLASS-CERAMIC MATERIAL**

(71) Applicant: Sibelco Nederland N.V., 6223 EP Maastricht (NL)
(72) Inventor: FERRARI, Francesco, 6223 EP Maastricht (NL); VENTURELLI, Davide, 6223 EP Maastricht (NL); LEESE, Samuel Mark, 6223 EP Maastricht (NL); COOLEN, Cornelius, 6223 EP Maastricht (NL)
(74) Representative: Forresters IP LLP

(57) **Abstract**

The present invention relates to a glass-ceramic material. The present invention also relates to a method of forming a glass-ceramic material. The present invention also relates to uses of a glass-ceramic material.

## Description

### FIELD OF THE INVENTION

The present invention relates to a glass-ceramic material. The present invention also relates to a method of forming a glass-ceramic material.

### BACKGROUND OF THE INVENTION

Glass-ceramic materials are used in multiple fields, for example bricks, pipes and roof tiles; ceramic bodies; craft pottery; frits, glazes and engobes; sanitary-ware; tiles; and, tableware. Glass-ceramic materials used in these fields typically comprise an amorphous phase, comprising glass, and a crystalline phase.

Glass-ceramic materials typically have zero or almost zero porosity, due to the way in which they are produced. Often, glass-ceramic materials are produced by a melting and annealing process. The first step (melting) reduces to zero or almost zero the porosity; the second step (annealing) provides conditions for crystal nucleation and growth.

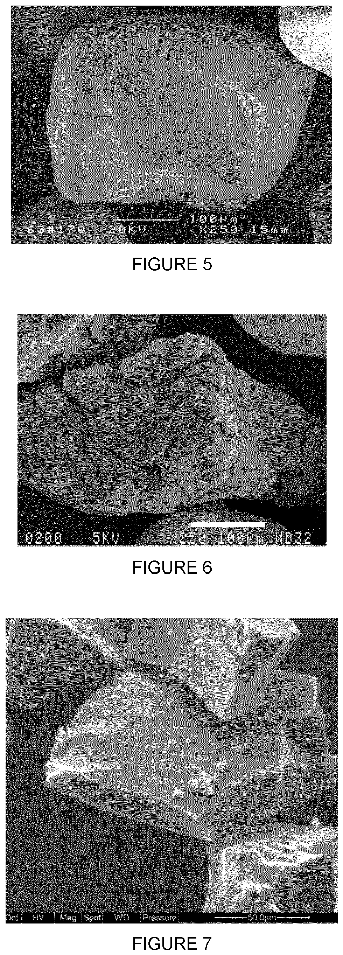

The zero or almost zero porosity of glass-ceramic materials, optionally in the form of a grit (a grit has a particle size distribution with a minimum particle size of 100 µm and a maximum particle size of 500 µm), might be a problem for applications in which a resin embedded glass-ceramic material needs to be produced. A porosity of higher than almost zero is beneficial in a glass-ceramic material (to be embedded in resin when forming an artificial stone) because the resin should preferably wet or contact as much of the surface of the glass-ceramic material as possible. For example, cristobalite grit due to the presence of micro-cracking and micro-porosity is easily embedded into a resin (when forming an artificial stone); while glass grit and quartz grit (quartz less than glass) have almost zero porosity and require a coupling agent to embed well into a resin (when forming an artificial stone). Figures 5, 6 and 7 show the surface of particles of quartz (Figure 5) with less porosity and cracks (than cristobalite), particles of cristobalite (Figure 6) and particles of glass with almost zero porosity (Figure 7).

There is a need for a glass-ceramic material to replace traditional glass-ceramic materials, wherein the glass-ceramic material has a porosity higher than traditional glass-ceramic materials. The intraparticle porosity of cristobalite grit particles is 12% ± 2%. Grit particles which could be used as an alternative to cristobalite grit particles (in at least the formation of synthetic stone products, with resin) preferably have an intraparticle porosity of from 2%, or from 3%, or from 4% to 15%.

Cristobalite is a mineral obtained by calcination of pure silica sand at a temperature of approximately 1550°C; for example, at a temperature of from 1300°C to 1700°C.

At room temperature, silica sand is mainly composed of a mineralogical phase called α-quartz. When the α-quartz is heated to approximately 1550°C, the crystalline lattice of the α-quartz undergoes a phase change. Upon heating, α-quartz initially undergoes a phase change to form β-quartz. Upon further heating, β-quartz then forms tridymite and then, at higher temperatures (typically from 1300°C to 1700°C, at atmospheric pressure), cristobalite is formed.

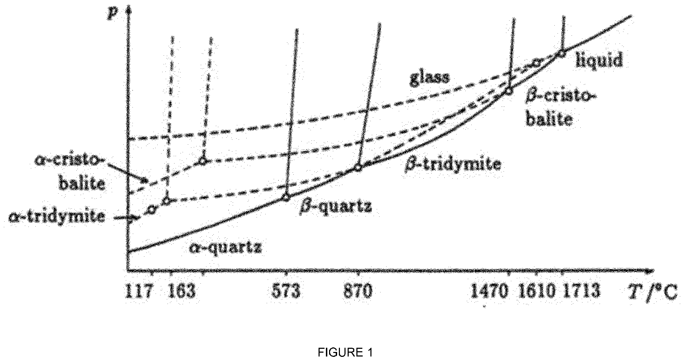

The different phases of silica at different temperatures and pressures are shown in the phase diagram depicted in Figure 1.

Cristobalite is chemically stable and mechanically strong. Commercial forms of cristobalite also have a high whiteness. Owing to its ease of manufacture, cristobalite is used in many applications. For example, cristobalite is used in engineering stone (e.g. work surfaces) and in paint.

In the engineering stone market (sometimes referred to as EGS), one of the biggest markets for cristobalite is in the production of kitchen countertops. The countertops are composed of a mineral filler and resin. The countertops typically comprise the mineral filler at a high percentage (up to 92 weight %), whilst one or more resins (optionally: 2K epoxy resins, for example Fugante^{™} Epoxy 2k; or, polyester resins, for example POLARIS polyester resin (produced by Ashland^{™})) are present in lower percentages (up to 8 weight %). Cristobalite, quartz, or, cristobalite and quartz, are often incorporated in the countertops as the mineral filler.

Typically, a countertop (composed of a mineral filler and resin) will require cutting prior to installation. A countertop is typically cut in a dry way with simple abrasion tools. This method of cutting the countertop generates dust that is composed of a mixture of the resin and mineral filler. The mineral dust may contain cristobalite, quartz, or, cristobalite and quartz. Cristobalite and quartz dust can lead to work related cell silicosis through inhalation.

Cristobalite, quartz, or cristobalite and quartz, are also used in paint compositions. Paint compositions typically comprise these minerals at from 10 to 20 weight %. Paint can be a source of airborne particles, for example these particles can be generated through spraying paint or dry sanding paint. The airborne particles may contain cristobalite, quartz, or, cristobalite and quartz. As discussed above, cristobalite and quartz airborne particles can lead to cell silicosis and lung cancer through inhalation.

Cristobalite and quartz have been investigated for carcinogenic properties when the minerals are dispersed in the air and therefore inhaled. The most dangerous particles are particles with a diameter below 10 µm and particles freshly generated from a high energy cutting process.

There is a need in at least the EGS and paint markets for a glass-ceramic material to replace traditional mineral fillers, wherein the glass-ceramic material can replace cristobalite, quartz, or, cristobalite and quartz; or, reduce cristobalite, quartz, or, cristobalite and quartz to below 1% in the final products.

### SUMMARY OF THE INVENTION

The present invention discloses a glass-ceramic material which can be used to replace, in whole or in part, cristobalite, quartz, or, cristobalite and quartz.

The present invention relates to a glass-ceramic material that has the same or similar physical properties as cristobalite.

The present invention is as set out in the following clauses:
1. A glass-ceramic material comprising:
   an amorphous phase comprising glass; and,
   a crystalline phase comprising diopside.
2. The glass-ceramic material of clause 1, wherein the glass comprises greater than 10 weight % sodium oxide.
3. The glass-ceramic material of clause 1 or clause 2, wherein the glass comprises greater than 10 weight % potassium oxide.
4. The glass-ceramic material of any one of clauses 1 to 3, wherein the crystals forming the crystalline phase are embedded within the glass.
5. The glass-ceramic material of any one of clauses 1 to 4, wherein the glass-ceramic material consists of:
   an amorphous phase comprising (or consisting of) glass;
   a crystalline phase comprising (or consisting of) diopside; and
   unavoidable impurities.
6. The glass-ceramic material of any one of clauses 1 to 5, wherein the glass-ceramic material consists of:
   an amorphous phase comprising (or consisting of) glass, wherein the amorphous phase makes up from 20 to 58 weight % of the glass-ceramic material;
   a crystalline phase comprising (or consisting of) diopside, wherein the crystalline phase makes up from 42 to 80 weight % of the glass-ceramic material; and
   unavoidable impurities.
7. The glass-ceramic material of any one of clauses 1 to 6, wherein the glass-ceramic material consists of:
   an amorphous phase comprising (or consisting of) glass, wherein the amorphous phase makes up from 40 to 49 weight % of the glass-ceramic material;
   a crystalline phase comprising (or consisting of) diopside, wherein the crystalline phase makes up from 51 to 60 weight %, of the glass-ceramic material; and
   unavoidable impurities.
8. The glass-ceramic material of any one of clauses 1 to 7, wherein the amorphous phase consists of glass (and optionally unavoidable impurities).
9. The glass-ceramic material of any one of clauses 1 to 8, wherein the crystalline phase consists of diopside (and optionally unavoidable impurities).
10. The glass-ceramic material of any one of clauses 5 to 9, wherein the unavoidable impurities comprise or consist of quartz, cristobalite, or quartz and cristobalite at less than 3.0 weight %, or at less than 2.5 weight %, or at less than 2.0 weight %, or at less than 1.5 weight %, or at less than 1.0 weight %, or at less than 0.5 weight %.
11. The glass-ceramic material of any one of clauses 1 to 10, wherein the glass-ceramic material is white or near white in colour.
12. The glass-ceramic material of any one of clauses 1 to 11, wherein the glass-ceramic material has the CIELAB colorimetric parameters: from 92 to 100 (L); from - 0.5 to +0.5 (a); from +0.4 to +3.0 (b); optionally, wherein the CIELAB colorimetric properties are measured on a HunterLab^{™} Miniscan XE Plus.
13. The glass-ceramic material of any one of clauses 1 to 12, wherein the glass-ceramic material has an intraparticle porosity of: zero or more; or, greater than 1%; or, greater than 2%; or, from 2% to 15%; or from 4% to 15%; or from 4% to 10%.
14. The glass-ceramic material of any one of clauses 1 to 13, wherein the glass-ceramic material has a particle size distribution with a minimum particle size of 100 µm and a maximum particle size of 500 µm (in the form of a grit).
15. The glass-ceramic material of any one of clauses 1 to 14, wherein the glass-ceramic material has a particle size distribution with a maximum particle size of 45 µm (in the form of a flour).
16. A synthetic stone comprising the glass-ceramic material of any one of clauses 1 to 15.
17. The synthetic stone of clause 16, wherein the synthetic stone further comprises a resin.
18. The synthetic stone of clause 16 or clause 17, wherein synthetic stone comprises 80 to 92 weight % glass-ceramic material and 8 to 20 weight % resin.
19. The synthetic stone of any one of clauses 16 to 18, wherein the resin is an epoxy resin, a polyester resin or a polyurethane resin; optionally, wherein the resin is a 2K epoxy resin.
20. The synthetic stone of any one of clauses 16 to 19, wherein the synthetic stone is white or near white in colour.
21. The synthetic stone of any one of clauses 16 to 20, wherein the glass-ceramic material has the CIELAB colorimetric parameters: from 92 to 100 (L); from -0.5 to +0.5 (a); from +0.4 to +3.0 (b); optionally, wherein the CIELAB colorimetric properties are measured on a HunterLab^{™} Miniscan XE Plus.
22. A paint composition; or, an ink composition; or, a filtration medium; or, a ceramic composition; or, a dental composition; or, a biomedical composition; or, an implant material; or, a fuel cell; or a nuclear waste immobilization composition; comprising the glass-ceramic material of any one of clauses 1 to 15.
23. A method of forming a glass-ceramic material, comprising the following steps:
   providing dolomite, quartz (or cristobalite, or quartz and cristobalite) and feldspar to form a mixture; and,
   heating the mixture to a temperature of from 1100 to 1400 °C.
24. The method of clause 23, wherein the feldspar is sodium feldspar.
25. The method of clause 23 or clause 24, further comprising the step of adding sodium silicate to the mixture before heating.
26. The method of any one of clauses 23 to 25, wherein each starting material is present in the following amounts: dolomite from 25 to 60 weight %, quartz (or cristobalite, or quartz and cristobalite) from 10 to 30 weight %; and, sodium feldspar from 20 to 55 weight %; optionally, sodium silicate from 2.5 to 15 weight %.
27. The method of any one of clauses 23 to 26, wherein each starting material is present in the following amounts: dolomite 40 weight % ± 10 weight %, quartz (or cristobalite, or quartz and cristobalite) 19 weight %; and, sodium feldspar 40 weight % ± 10 weight %; optionally, sodium silicate 10 weight % ± 5 weight %.
28. The method of any one of clauses 23 to 27, wherein the heating step occurs for from 50 to 70 minutes; or, from 60 minutes to 600 minutes.
29. A glass-ceramic material obtained by, or obtainable by, the method of any one of clauses 23 to 28.

### BRIEF DESCRIPTION OF THE FIGURES

Embodiments of the invention are described below with reference to the accompanying drawings. The accompanying drawings illustrate various embodiments of systems, methods, and embodiments of various other aspects of the disclosure. Any person with ordinary skills in the art will appreciate that the illustrated element boundaries (e.g., boxes, groups of boxes, or other shapes) in the figures represent one example of the boundaries. It may be that in some examples one element may be designed as multiple elements or that multiple elements may be designed as one element. In some examples, an element shown as an internal component of one element may be implemented as an external component in another and vice versa. Furthermore, elements may not be drawn to scale. Non-limiting and non-exhaustive descriptions are described with reference to the following drawings. The components in the figures are not necessarily to scale, emphasis instead being placed upon illustrating principles.
Figure 1 is a phase diagram of silica at different temperatures and pressures.
Figure 2 is a graph showing the intrusion volume (mL / g) as a function of porosity for a glass-ceramic material according to the present invention.
Figure 3 is a photograph showing a visual comparison of two samples (A and B) on a white background.
Figure 4 is a photograph showing a visual comparison of two samples (A and B), as shown in Figure 3, on a black background.
Figure 5 is an SEM (scanning electron microscope) image showing particles of silica sand in quartz M32.
Figure 6 is an SEM (scanning electron microscope) image showing particles of cristobalite in cristobalite M72T.
Figure 7 is an SEM image showing particles of a crushed soda-lime glass.

### DETAILED DESCRIPTION OF THE INVENTION

Some embodiments of this disclosure, illustrating all its features, will now be discussed in detail. The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items.

It must also be noted that as used herein and in the appended claims, the singular forms "a," "an," and "the" include plural references unless the context clearly dictates otherwise. Although any systems and methods similar or equivalent to those described herein can be used in the practice or testing of embodiments of the present disclosure, the preferred systems and methods are now described.

Embodiments of the present disclosure will be described more fully hereinafter with reference to the accompanying drawings in which like numerals represent like elements throughout the several figures, and in which example embodiments are shown. Embodiments of the claims may, however, be embodied in many different forms and should not be construed as limited to the embodiments set forth herein. The examples set forth herein are non-limiting examples and are merely examples among other possible examples.

Some of the terms used to describe the present invention are set out below:
"Glass-ceramic material" refers to a material which has an amorphous phase comprising glass and a crystalline phase. Glass-ceramic materials have the fabrication advantages of glass and include some of the properties of ceramics.

"Cristobalite" refers to a mineral that is a high-temperature polymorph of quartz. One example of cristobalite is cristobalite grit SIBELITE^{®} M72T (from Sibelco^{®}). Cristobalite grit M72T is industrially produced. Cristobalite grit M72T is commonly used as a starting material for engineering stone and paint applications. Cristobalite grit M72T is referred to as a grit because it has a particle size distribution with a minimum particle size of 100 µm and a maximum particle size of 500 µm. Another example of cristobalite is cristobalite flour SIBELITE^{®} M3000 (from Sibelco^{®}). Cristobalite flour M3000 is referred to as a flour because it has a particle size distribution with a maximum particle size of 45 µm.

"Quartz" refers to a chemical compound consisting of one part silicon to two parts oxygen (SiO₂). One example of quartz is quartz M32 (from Sibelco^{®}). Quartz M32 refers to a silica sand which is industrially processed. Quartz M32 is referred to as a sand because it has a particle size distribution with a minimum particle size of 63 µm and a maximum particle size of 1000 µm. The mineral is commonly used as a starting material for the glass, crystal or ceramic industries as a source of silica in foundries, tile glues, plasters, mortars or coatings.

"Dolomite" refers to a mineral with the formula CaMg(CO₃)₂. Dolomite D-120 (from Sibelco^{®}) refers to an anhydrous carbonate mineral composed of calcium magnesium carbonate. Dolomite D-120 is industrially produced.

"Diopside" refers to a mineral with the formula MgCaSi₂O₆. Naturally occurring diopside typically forms a solid solution series with hedenbergite (CaFeSi₂O₆). Therefore, naturally occurring diopside can incorporate Fe in its structure (Fe replacing Mg) and still be considered diopside until a threshold of approximately 14 weight % Fe₂O₃. Naturally occurring diopside is a rare mineral that occurs in two distinct geological settings: (1) in types of ultrabasic rocks, such as kimberlite; and, (2) in a setting of contact metamorphism often associated with wollastonite. In these geological settings, limited to a few percent of the continental earth crust, diopside crystals can commonly be found in micro or macro crystal shape. The occurrence of a concentration of naturally occurring diopside in (mineable) veins, or masses (thousands of cubic meters close to surface) is extremely rare. The occurrence of large masses of rock (tens or hundreds of thousands of cubic meters) with a percentage of diopside more than 10% are rare as well. In such large masses, often dominated by wollastonite, diopside can be concentrated after crushing to a fine sand size with conventional mineral processing techniques (such as flotation) depending of the value of the associated rock composition.

"Calcined alumina" refers to a commercial form of alumina (Al₂O₃). Calcined alumina SO-143 supply by DADCO Alumina & Chemicals Ltd is formed by firing alumina at temperatures around 1,000°C, for example at temperatures from 900°C to 1,100°C.

"Feldspar" refers to a group of minerals with the formulae KAlSi₃O₈, NaAlSi₃O₈ and CaAl₂Si₂O₈. One example of feldspar is sodium feldspar; sodium feldspar includes Albite and has the formula NaAlSi₃O₈. MAXUM^{®} 1005-K sodium feldspar is a sodium feldspar produced by Sibelco^{®}.

"CIELAB colour space" refers to colour space defined by the International Commission on Illumination. It expresses colour as three numerical values: L (lightness); a (green-red colour components); and, b (blue-yellow components).

"White" refers to a colour expressed using CIELAB colour space coordinates. White has the parameters: 100 (L), 0 (a), 0 (b).

"Near white" refers to a colour expressed using CIELAB colour space coordinates. Near white has the CIELAB colour space coordinates from 90 to below 100 (L), from -0,5 to +0,5 (a), from 0 to 4 (b).

"LOI" refers to loss on ignition. This measurement is conducted by strongly heating a sample of the mineral at a specified temperature and allowing any volatile substances to escape. This will continue until the mass of the mineral stops changing. The value of LOI represents the mass of moisture and volatile material present in a sample.

"Weight %" refers to the percentage weight in grams of a component of a composition in every 100 grams of a composition. For example, if a mineral composition contains diopside at 25 weight %, then there is 25 g of diopside for every 100 g of the mineral composition.

"Interparticle porosity" refers to the porosity between particles within a composition.

"Intraparticle porosity" refers to the porosity within individual particles or grains, of particles or grains within a composition.

"Unavoidable impurities" refers to components present in a composition which do not affect the properties of the composition. Unavoidable impurities are present in a composition at: less than 5 weight %; or, less than 4 weight %; or, less than 3 weight %; or, less than 2 weight %; or, less than 1 weight %; or less than 0.5 weight %; or less than 0.1 weight %.

### Formation of glass-ceramic material 1 (GCM1)

In one example of the present invention, a glass-ceramic material is formed from quartz, dolomite and sodium feldspar.

In this example of the present invention, the quartz is provided at 19 weight %. In other examples, the quartz is provided at from 10 to 30 weight %. In this example of the present invention, the quartz is provided at 98 % pure. In other examples, the quartz is provided at from 96 to 100 % pure.

In this example of the present invention, the dolomite is provided at 40 weight %. In other examples, the dolomite is provided at from 25 to 60 weight %. In this example of the present invention, the dolomite is provided at 96 % pure. In other examples, the dolomite is provided at from 92 to 100 % pure.

In this example of the present invention, the sodium feldspar is provided at 41 weight %. In other examples, the sodium feldspar is provided at from 25 to 55 weight %. In this example of the present invention, the sodium feldspar is provided at 88 % pure. In other examples, the sodium feldspar is provided at from 85 to 91 % pure.

In this example of the present invention, the starting materials for GCM1 include quartz (as described above), dolomite (as described above), sodium feldspar (as described above), and, optionally water and/or alumina balls.

In this example, the starting materials for the glass-ceramic material were provided as follows: 85.5 g quartz (quartz M32), 180 g dolomite (dolomite D-120) and 184.5 g sodium feldspar (MAXUM^{®} 1005-K; NaAlSi₃O₈). In other examples, the starting materials for the glass-ceramic material may be present at from 65 to 125 g quartz, 160 to 200 g dolomite and 164 to 204 g sodium feldspar.

In this example, the starting materials were milled together in a wet way within an alumina jar containing 400g of water and 450g of alumina balls (the alumina balls each having a diameter of from 20 to 25mm) for 60 minutes. The alumina balls are used as grinding media. In other examples, the time of milling the starting materials of the glass-ceramic material may be: from 20 to 180 minutes; or, from 40 minutes to 90 minutes; or 60 minutes plus or minus 10%.

The starting materials were dried after milling. In this example, the temperature at which the starting materials were dried is 110 °C. The temperature at which the starting materials were dried may be less than 110 °C, for example from 90 to 100 °C, or for example from 100 to 110 °C. The temperature at which the starting materials are dried may be greater than 110 °C, for example from 110 to 120 °C, or for example from 120 to 130 °C.

In this example, the starting materials were dried for 12 hours. The starting materials may be dried for less than 12 hours, for example for from 6 to 8 hours, or for from 8 to 10 hours, or for from 10 to 12 hours. The starting materials may be dried for longer than 12 hours, for example for from 12 to 14 hours, or for from 14 to 16 hours, or for from 16 to 18 hours.

In this example, the starting materials were pulverised. Typically, pulverisation occurs after the starting materials have been dried.

Pulverisation can occur in a pestle and mortar. Pulverisation may require a sieve. The sieve may have a mesh size of 1 mm. The sieve may have a mesh size less than 1 mm, for example, from 0.1 mm to 1 mm, or from 0.01 mm to 0.1 mm, or from 0.001 mm to 0.01 mm.

In this example, GCM1 is formed by calcination. GCM1 may be calcined in a kiln. Typically, the starting materials are calcined after pulverisation.

Optionally, the calcination can be performed using a kiln, optionally a static kiln or a roller kiln, optionally in a Nannetti Static or Roller Kiln.

Optionally, the starting materials can be placed in an alumina crucible, which in turn is placed in the kiln. Optionally, the calcination can be performed using an alumina crucible. Further optionally, the crucible can have a diameter of 12 cm, height of 9 cm and a thickness of 1 cm. Optionally, 50 g of the starting materials are placed in the alumina crucible prior to calcination.

Optionally, the starting materials can be formed into tiles, which are then placed in the kiln.

To form the tiles, water and sodium silicate (in the ratio of 90:10 by weight, water:sodium silicate) may be added to the tiles and then mixed, optionally in a Speed Mixer by HausChild. In other examples, the ratio of water:sodium silicate may be 80:20 by weight respectively, or 70:30 by weight respectively.

The mixture may be mixed for 5 seconds. The mixture may be mixed for less than 5 seconds, for example for from 2 to 3 seconds, or for from 3 to 4 seconds, or for from 4 to 5 seconds. The mixture may be mixed for more than 5 seconds, for example for from 5 to 6 seconds, or for from 6 to 7 seconds, or for from 7 to 8 seconds.

The mixture may then be pressed to form a tablet, optionally with a Nannetti Laboratory Press. The mixture may be pressed at 250 Kg cm⁻². The mixture may be pressed for less than 250 Kg cm⁻², for example at from 150 to 200 Kg cm⁻², or at from 200 to 250 Kg cm⁻². The mixture may be pressed at more than 250 Kg cm⁻², for example at from 250 to 550 Kg cm⁻², or at from 300 to 350 Kg cm⁻².

The tablet may be dried inside an oven, optionally a Nannetti oven. In this example, the temperature at which the tablet was dried is 110 °C. The temperature at which the tablet was dried may be less than 110 °C, for example from 90 to 100 °C, or for example from 100 to 110 °C. The temperature at which the tablet was dried may be greater than 110 °C, for example from 110 to 120 °C, or for example from 120 to 130 °C. In this example, the tablet was dried for 12 hours. The tablet may be dried for less than 12 hours, for example for 6 to 8 hours, or for 8 to 10 hours, or for 10 to 12 hours. The tablet may be dried for longer than 12 hours, for example for 12 to 14 hours, or 14 to 16 hours, or for 16 to 18 hours.

In this example, the calcination is performed at a high temperature. The temperature required to produce the glass-ceramic material was from 1100 °C to 1300°C, or from 1190°C to 1250°C. The temperature required to produce the glass-ceramic material may be 1200°C or higher.

In this example, the time of calcination at from 1100°C to 1300°C (optionally at 1200°C) is 60 minutes. The time of calcination at from 1100°C to 1300°C (optionally at 1200°C) may be shorter than 60 minutes, for example from 20 minutes to 60 minutes, or from 40 minutes to 60 minutes. The time of calcination at from 1100°C to 1300°C (optionally at 1200°C) may be longer than 60 minutes, for example from 60 minutes to 180 minutes, or 60 minutes to 150 minutes, or 60 minutes to 130 minutes, or 60 minutes to 90 minutes.

Advantageously, the sodium feldspar promotes the development of a glass phase during calcination, which embeds the other starting minerals. The sodium feldspar can therefore melt the other starting materials within its own mass.

In this example, the glass-ceramic material formed following calcination is composed of a mixture of minerals. The calcined glass-ceramic material comprises diopside. Diopside is the main component of the glass-ceramic material; for example, at 55.8 weight %. In other examples diopside may be present at from 50 to 60 weight %, or from 52 to 58 weight %.

In this example, the calcined glass-ceramic material also comprises an amorphous phase comprising glass. The amorphous phase comprising glass may be present at 42.9 weight %. In other examples the amorphous phase comprising glass may be present at from 40 to 50 weight %, or from 41 to 44 weight %.

The amorphous phase comprising glass contains a relatively high content of sodium oxide. The amorphous phase comprising glass contains 10% by weight or higher sodium oxide. The relatively high content of sodium oxide advantageously creates a glass-ceramic material quickly (60 minutes ± 5 minutes, at a temperature of 1200°C ± 20°C). To produce the same glass-ceramic material on an industrial scale a heating time of 240 minutes ± 20 minutes is needed, followed by an annealing step for crystallisation of 60 minutes ± 10 minutes.

In this example, the calcined glass-ceramic material also comprises quartz and cristobalite. Quartz and cristobalite may be present, for example, at a total of 1.3 weight %. In other examples quartz and cristobalite may be present at a total of 10 weight % or less, or a total of 5 weight % or less, or a total of 3 weight % or less.

In this example, quartz may be present at 1.2 weight % and cristobalite may be present at 0.1 weight %.

In this example, the calcined glass-ceramic material formed following calcination comprises a mixture of chemical constituents. The calcined glass-ceramic material comprises SiO₂. SiO₂ is the main chemical constituent of the calcined glass-ceramic material, for example at 58.19 weight %. In other examples, SiO₂ may be present at from 45 to 75 weight %, or from 50 to 65 weight %, or from 55 to 60 weight %.

In this example, the calcined glass-ceramic material also comprises Al₂O₃. Al₂O₃ may be present at 9.93 weight %. In other examples Al₂O₃ may be present at from 2 to 18 weight %, or from 5 to 15 weight %, or from 7 to 12 weight %.

In this example, the calcined glass-ceramic material also comprises CaO. CaO may be present at 15.61 weight %. In other examples CaO may be present at from 5 to 25 weight %, or from 10 to 15 weight %, or from 13 to 17 weight %.

In this example, the calcined glass-ceramic material also comprises MgO. MgO may be present at 10.82 weight %. In other examples MgO may be present at from 2 to 18 weight %, or from 5 to 75 weight %, or from 7 to 12 weight %.

In this example, the calcined glass-ceramic material also comprises Na₂O. Na₂O may be present at 10.82 weight %. In other examples Na₂O may be present at from 2 to 18 weight %, or from 5 to 15 weight %, or from 7 to 12 weight %.

In this example, the calcined glass-ceramic material may also comprise TiO₂, Fe₂O₃ and K₂O. TiO₂, Fe₂O₃ and K₂O may be present at a total of 1 weight %, or less. In other examples, TiO₂, Fe₂O₃ and K₂O may be present at a total of 0.5 weight %, or less.

In this example, the calcined glass-ceramic material has an intraparticle porosity higher than 1 %. The intraparticle porosity may be 6.33 %. In other examples, the intraparticle porosity may be from 2 to 10 %, or from 3 to 9 %, or from 4 to 8 %, or from 5 to 7 %.

The glass-ceramic material mitigates carcinogenic effects when compared to other minerals, for examples quartz and cristobalite.

The glass-ceramic material is white or near white in colour.

In this example, the glass-ceramic material is crystallised in one single calcination step.

The glass-ceramic material may be used in applications including bricks pipes and roof tiles; ceramic bodes; craft pottery; frits, glazes and engobes; sanitary-ware; tiles; tableware; engineering stone; and, paint.

### Examples

The following is a non-limiting example that discuss, with reference to tables and figures, the advantages of the glass-ceramic material.

### Example 1: Formation of a glass-ceramic material (GCM1) according to the present invention

The following non-limiting example discusses the preparation of a glass-ceramic material according to the presently claimed invention.

In this non-limiting example, the glass-ceramic material was formed from three starting materials, namely, quartz M32 or cristobalite M72T, dolomite D-120 and sodium feldspar (MAXUM^{®} 1005-K). The starting materials were all obtained from Sibelco^{®}.

In this example, the glass-ceramic material was formed according to a method comprising the steps of:
1. Chemical analysis of the starting materials;
2. Mineralogical analysis of the starting materials;
3. Determination of the weight composition of the starting materials before calcination;
4. Preparation and mixing of the starting materials;
5. Calcination;
6. Characterisation of the calcined glass-ceramic material;
7. Determining the colorimetric parameters of the calcined glass-ceramic material;
8. Determining the porosity of the calcined glass-ceramic material.

Each step is discussed in more detail:

### Step 1. Chemical analysis of the starting materials

The chemical composition of the starting materials used to make the glass-ceramic material was analysed by applying x-ray fluorescence (XRF) techniques.

In addition, the LOI of each starting material was analysed on a laboratory muffle furnace. The furnace was heated by 10 °C every minute until 1000 °C was reached. The end environment was maintained for 30 minutes.

Table 1 outlines the results for the chemical composition and LOI analysis of the starting materials used to form the glass-ceramic material.

**Table 1: The chemical composition and LOI of the starting materials used to form the glass-ceramic material.**

| **Chemical Composition (Weight %)** | | | | | | | | | |
|---|---|---|---|---|---|---|---|---|---|
| **Starting material** | **SiO₂** | **Al₂O₃** | **TiO₂** | **Fe₂O₃** | **CaO** | **MgO** | **Na₂O** | **K₂O** | **LOI** |
| Quartz M32 or M72T | 98.50 | 0.80 | 0.04 | 0.06 | 0.06 | 0.06 | 0.01 | 0.20 | 0.00 |
| Dolomite D-120 | 0.50 | 0.02 | 0.00 | 0.03 | 30.41 | 21.90 | 0.00 | 0.00 | 47.14 |
| Sodium feldspar MAXUM^{®} 1005-K | 68.82 | 19.25 | 0.03 | 0.03 | 1.16 | 0.00 | 10.30 | 0.24 | 0.17 |

With reference to Table 1, the most common chemical in the quartz M32 or M72T is SiO₂ (98.5 weight %). With reference to Table 1, the most common chemical in the dolomite D-120 is CaO (30.41 weight %), and then MgO (21.90 weight %); with 47.14 LOI. With reference to Table 1, the most common chemical in the sodium feldspar is SiO₂ (68.82 weight %).

### Step 2. Mineralogical analysis of the starting materials

The mineralogy of the starting materials used to make the glass-ceramic material was analysed by applying X-ray diffraction techniques. Table 2 shows the purity of the minerals as a percentage of total weight.

**Table 2: The mineralogy of the minerals used to form the glass-ceramic material.**

| | **Mineral present** | **XRD Analysis (Weight %)** |
|---|---|---|
| Dolomite (D-120) | Dolomite | 96 |
| | Other | 4 |
| Quartz (M32) | Quartz | 98 |
| | Other | 2 |
| Sodium feldspar (MAXUM^{®} 1005-K) | Albite | 88 |
| | Other | 12 |

With reference to Table 2, quartz M32 has a purity of 98 weight %. With reference to Table 2, dolomite D-120 has a purity of 96 weight %. With reference to Table 2, sodium feldspar has a purity of 88 weight %. All starting materials have a purity of 88 weight % or greater.

### Step 3. Weight composition of the glass-ceramic material before firing

Table 3 shows the composition of the glass-ceramic material before firing.

During the firing process the composition changes due to the processing conditions, i.e. chemical and structural changes occur during heating.

**Table 3: Composition of the glass-ceramic material before firing.**

| **Starting material** | **Weight %** |
|---|---|
| Quartz (M32) | 19 |
| Dolomite (D-120) | 40 |
| Sodium feldspar (MAXUM^{®} 1005-K) | 41 |

With reference to Table 3, the glass-ceramic material requires dolomite D-120 and sodium feldspar (MAXUM^{®} 1005-K) to be the main starting material components of the glass-ceramic material at 40 weight % and 41 weight % respectively. The composition also includes quartz at 19 weight %.

### Step 4. Preparation and mixing of the starting materials

The starting materials (described in step 3) were weighed on an ORMA Technology Balance. Quartz M32 (85.5 g), dolomite D-120 (180 g) and sodium feldspar (184.5 g) were weighed and put inside an alumina jar. The capacity of the alumina jar was 1 litre.

Alumina balls with a diameter of 20 to 25 mm (450 g) and water (400 g) were added to the alumina jar in addition to the starting materials respectively as a grinding corpse and grinding vehicle.

The alumina jar and its contents were placed inside a Nannetti S.r.l. Laboratory SPEEDY discontinuous fast mill for 60 minutes.

The density of the slurry formed in the alumina jar was determined on a pycnometer (known volume of 100ml and weight of 200g). The density of the particles was determined to be approximately 1550 g dm⁻³.

The milling product was then dried in a Nannetti Fast Dryer at 110 °C for 12 hours. A powder was formed.

The powder was subsequently pulverised using an alumina mortar and pestle. The powder was then sieved using a sieve with a 1 mm mesh. The particles were sieved because not all of the powder will be ground completely in the mill. Sieving is important to avoid big pieces of material forming the final glass-ceramic material.

The conditions required to form the powder were set for a laboratory experiment. In other examples, the conditions may change for an industrial scale method.

### Step 5. Calcination

For calcination, in a first example, the powder (of step 4) was formed into tiles. To form the tiles, a solution of water and sodium silicate were added to the powder. The solution of water and sodium silicate was prepared starting from Reoflux (supplied by Lamberty^{™}). A ratio of 90 weight % water: 10 weight % Reoflux 20 was prepared. This solution was then mixed in combination 90:10 (where 90 is the solid content and 10 is the solution content in weight) with the powder using a laboratory speed mixer (Macinacafè by Moulinex) for 5 seconds. The resultant mixture was poured into a press mould and then pressed at 250 Kg cm⁻² using a Nannetti laboratory press. The tablet obtained was then dried in a Nannetti Fast Dryer at 110 °C for 24 hours.

Calcination of the glass-ceramic material was conducted on a Nannetti Kiln. This kiln was able to reach temperatures of up to 1400°C, if required.

In this example, calcination was conducted at a maximum temperature of 1200°C in the Nannetti Kiln.

The tiles were placed in the kiln on a cordierite refractory plate. The cordierite refractory plate's dimensions were 30cm by 30 cm and 0.5 cm in thickness.

In this non-limiting example, 50 grams of tile (corresponding to the average weight of a tile with dimensions 110 mm long, 55 mm width and 5 mm thick) was calcined to form the glass-ceramic material.

In this non-limiting example, the refractory plate and the tile contents (placed on the plate) were placed inside the chamber of the Nannetti Kiln. The temperature was increased 10°C every minute until a maximum temperature of 1200°C was reached. This maximum temperature of the kiln was maintained for a period of 60 minutes.

At the end of the 60 minutes, the plate was removed from the kiln and permitted to cool to room temperature.

In a second example, the powder (of step 4) was directly poured into a mullite crucible. Calcination of the glass-ceramic material was conducted on a Nannetti Kiln. This kiln was able to reach temperatures of up to 1400°C, if required.

In this example, calcination was conducted at a maximum temperature of 1200°C in the Nannetti Kiln.

In this non-limiting example, 50 grams of powder were calcined to form the glass-ceramic material.

In this non-limiting example, the crucible and its contents were placed inside the chamber of the Nannetti Kiln. The temperature was increased 10°C every minute until a maximum temperature of 1200°C was reached. This maximum temperature of the kiln was maintained for a period of 60 minutes

At the end of the 60 minutes, the crucible was removed from the kiln and permitted to cool to room temperature.

The conditions required to form the glass-ceramic material in the kiln were set for a laboratory experiment. In other examples, the calcination conditions and cooling method may change for an industrial scale method.

### Step 6. Characterisation of the glass-ceramic material

The glass-ceramic material formed from Step 5 was characterised. Additionally, the colorimetric properties of the glass-ceramic material were determined.

The chemical composition of the glass-ceramic material before and after calcination was determined by XRF analysis. The results are shown in Table 4.

**Table 4: The chemical composition of the glass-ceramic material before and after calcination.**

| Chemical composition before calcination | | Chemical composition after calcination | |
|---|---|---|---|
| **Chemical** | **Weight %** | **Chemical** | **Weight %** |
| SiO₂ | 47.18 | SiO₂ | 58.18 |
| Al₂O₃ | 8.05 | Al₂O₃ | 9.93 |
| TiO₂ | 0.02 | TiO₂ | 0.03 |
| Fe₂O₃ | 0.04 | Fe₂O₃ | 0.04 |
| CaO | 12.65 | CaO | 15.61 |
| MgO | 8.77 | MgO | 10.82 |
| Na₂O | 4.23 | Na₂O | 5.22 |
| K₂O | 0.14 | K₂O | 0.17 |
| LOI | 18.92 | LOI | 0.00 |

With reference to Table 4, the most common chemical in the glass-ceramic material before and after calcination is SiO₂.

The mineral composition of the glass-ceramic material after calcination was determined by XRD analysis and is shown in Table 5.

**Table 5: The mineralogy of the glass-ceramic material after calcination.**

| **Mineral** | **Weight %** |
|---|---|
| Quartz | 1.2 |
| Cristobalite | 0.1 |
| Wollastonite | 0.0 |
| Pseudowollastonite | 0.0 |
| Diopside | 55.8 |
| Plagioclase (Anorthite) | 0.0 |
| Periclase | 0.0 |
| Melilite | 0.0 |
| Monticellite | 0.0 |
| Merwinite | 0.0 |
| Grossite | 0.0 |
| Spinel | 0.0 |
| Amorphous phase comprising glass | 42.9 |

With reference to Table 5, the most common mineral in the glass-ceramic material is diopside, and then the amorphous phase comprising glass.

### 7. Determining the colorimetric parameters of the calcined glass-ceramic material

Colorimetric properties of the glass-ceramic material were measured. The colorimetric parameters are defined by CIELAB. The parameter "b" is important when assessing colour. The higher the parameter "b" is, the more yellow the material is. This is important because the human eye is more sensitive to this colorimetric parameters compared to the others (blue, red, green, white, black). To determine the colour of the glass-ceramic material, colour-colorimetric and spherical coordinates were used with a set light of D65/10°. The measurement was done using a colorimeter, the model being a HunterLab^{™} Miniscan XE Plus.

Firstly, the colorimetric properties of the glass-ceramic material (GCM1) were compared with the colorimetric parameters of cristobalite grit M72T (a grit which is used commercially as a mineral filler to form countertops composed of a mineral filler and resin).

To determine the colorimetric properties, 12 g of each sample (GCM1 (in grit form, i.e. with a particle size distribution with a minimum particle size of 100 µm and a maximum particle size of 500 µm) and M72T grit) were placed into separate small beakers and 8 g of epoxy resin added to each beaker. The mixtures were mixed in a Speed Mixer by HausChild for 60 seconds at 3000 rpm. The mixtures were then each poured into separate alumina cups for hardening. To harden the samples, they were left for 24 hours at a temperature of 35 °C. The colorimetric properties were measured once the samples had hardened.

**Table 6: Colorimetric parameters of GCM1 in grit form compared to cristobalite grit M72T, formulated with epoxy resin.**

| **Parameter** | **GCM1** | **Cristobalite M72T** |
|---|---|---|
| L | 92.7 | 90.0 |
| a | -0.3 | -0.6 |
| b | 2.3 | 1.0 |

With reference to Table 6, GCM1 (in grit form) has comparable colorimetric properties to cristobalite grit (when formulate in epoxy resin).

In a second experiment (an application test, using a formulation of grit and flour to simulate a final industrial product), 57.8 g of each sample in grit form were mixed with 31.6 g of each sample in flour form and 10.6 g of epoxy resin. The mixtures were mixed in a Speed Mixer by HausChild for 25 seconds at 2500 rpm, and then compacted using a vibrating vacuum compactor; the vacuum compactor had a vacuum chamber inside a circular mould into which the mixture is poured, during the compression phase the vacuum compactor vibrates to help prevent the formation of bubbles. The samples were left inside the vacuum compactor for 24 hours. The colorimetric properties were then measured.

**Table 7: Colorimetric parameters of GCM1 (in grit and flour forms) compared to cristobalite (in grit and flour forms) (when both formulated in the same amount (10.6 weight %) of a Fugante^{™} epoxy 2k resin).**

| **Parameter** | **GCM1** | **Cristobalite M72T** |
|---|---|---|
| L | 93.8 | 90.6 |
| a | -0.2 | -0.6 |
| b | 1.8 | 0.8 |

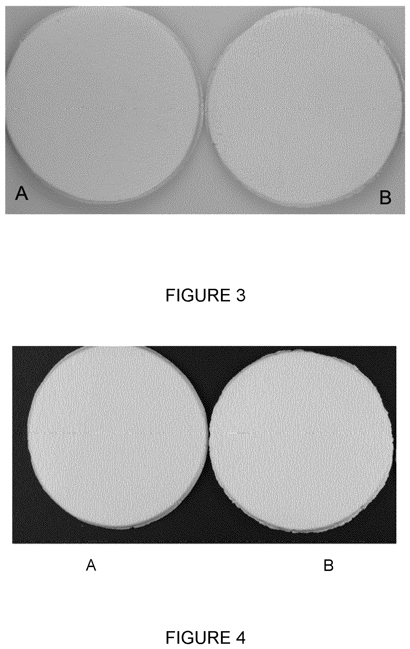

With reference to Table 7, the GCM1 has comparable colorimetric properties to cristobalite. Figure 3 and Figure 4 are photographs showing the visual comparison of the two samples on white (Figure 3) and black (Figure 4) background. In each of Figure 3 and Figure 4, A is the sample formed from Cristobalite M72T and epoxy resin whilst B is the sample formed from GCM1 and epoxy resin.

Quartz and cristobalite are present at minimal weight % in GCM1 (see Table 5). Therefore, GCM1 minimises carcinogenic activity (by minimising the presence of quartz and cristobalite) whilst at the same time giving similar or better colorimetric properties to cristobalite powder or grit, in a synthetic stone.

In these non-limiting examples, the resin combined with the mineral filler is Fugante^{™} Epoxy 2k, which is an epoxy resin. Alternatively, the resin can be other epoxy resins, or a polyester resin, or a polyurethane resin. Non-limiting examples of polyester resins include AROPOL^{™} LP 67400 (produced by INEOS^{™}), orthophthalic (produced by Ashland^{™}), dicyclopentadiene (produced by Ashland^{™}), isophthalic (produced by Ashland^{™}) and POLARIS (produced by Ashland^{™}). Non-limiting examples of polyurethane resins include URETAN NR (produced by Cores^{™}) or PUCORE NG (produced by Cores^{™}). When forming a synthetic stone (for use in or as, for example, a kitchen countertop, facades, bathrooms or furniture) with mineral filler and resin, typically the amount of mineral filler is from 80 to 92 weight % and the amount of resin (optionally of the types listed previously) is from 8 to 20 weight %.

### 8. Determining the porosity of the calcined glass-ceramic material

The porosity of the glass-ceramic material was measured. The results are shown in Table 8.

In this example, the sample of GCM1 from which the porosity measurements were obtained had a particle size distribution with a minimum particle size of 100 µm and a maximum particle size of 500 µm (i.e. it was GCM1 grit), and therefore the interparticle and intraparticle porosity were determined.

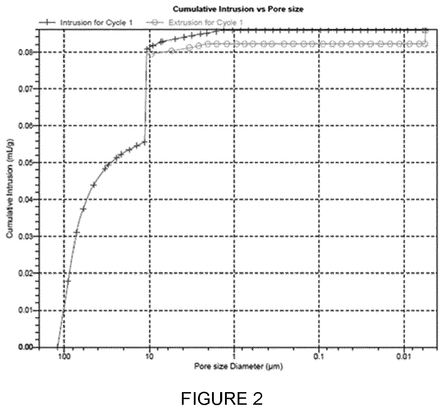

The porosity values were extracted from Figure 2. Figure 2 shows intrusion volume (mL / g) as a function of porosity. The volume of the intraparticles and the intraparticle porosity were calculated when the slope of the curve suddenly changes: this sudden change indicates the transition from interparticle porosity to intraparticle porosity.

Figure 2 was obtained on an Autopore IV 9500 (V1.09, serial 867). The parameters set on the Autopore IV 9500 to obtain Figure 2 were:
**Penetrometer parameters**
   Penetrometer: 100578 - 5 Bulb, 1.1 Stem, Powder
   Pen. Constant: 22.065 µL/pF Pen. Weight: 69.2990 g
   Stem Volume: 1.1000 mL Max. Head Pressure: 4.4500 psia
   Pen. Volume: 6.0511 mL Assembly Weight: 125.7810 g
**Hg Parameters**
   Adv. Contact Angle: 130.000 degrees Rec. Contact Angle: 130.000 degrees
   Hg Surface Tension: 485.000 dynes/cm Hg Density: 13.5438 g/mL
**User Parameters**
   Param 1: 0.000 Param 2: 0.000 Param 3: 0.000
**Low Pressure:**
   Evacuation Pressure: 50 µmHg
   Evacuation Time: 5 mins
   Mercury Filling Pressure: 1.52 psia
   Equilibration Time: 10 secs
   Maximum Intrusion Volume: 0.010 mL/g
**High Pressure:**
   Equilibration Time: 10 secs
   Maximum Intrusion Volume: 0.010 mL/g
   No Blank Correction
   (From Pressure 0.10 to 33000.00 psia)

This calculation of porosity values is a semi-quantitative assessment of two different types of porosity (interparticle porosity and intraparticle porosity). A report of the total porosity for each sample was obtained; the volume of mercury intruded in the sample and the graph of the pore size vs mercury volume intruded. On the graph of Figure 2, the change of slope was identified. With GCM1, the change in slope was identified at a volume of 0.0575 mL/g. This value is the interparticle porosity of the GCM1 sample. The difference in volume between total porosity and interparticle porosity gives the value of the intraparticle porosity. In GCM1, the intraparticle porosity was assessed to be 6.33%.

**Table 8: The porosity of the glass-ceramic material (GCM1) compared with cristobalite M72T, both with a grit particle size distribution (i.e. a particle size distribution with a minimum particle size of 100 µm and a maximum particle size of 500 µm).**

| | Mercury Porosimetry (%) | Tot Volume Intruded (ml Hg) | Volume Inter Particle (ml Hg/g) | Volume Intra Particle (ml Hg/g) | Interparticle Porosity (%) | Intraparticle Porosity (%) |
|---|---|---|---|---|---|---|
| GCM1 | 19 | 0.0858 | 0.0575 | 0.0283 | 12.85 | 6.33 |
| Cristobalite (M72T) | 30 | 0.1899 | 0.11 | 0.0799 | 17.38 | 12.62 |

With reference to Table 8, GCM1 has an intraparticle porosity higher than 1%. The intraparticle porosity of GCM1 is approximately 6%. GCM1 in grit form has lower porosity compared to Cristobalite M72T. However, the intraparticle porosity for GCM1 is not close to zero, as expected for most known glass-ceramic materials. The relatively high intraparticle porosity for GCM1 makes it a suitable replacement for Cristobalite M72T in at least EGS and paint applications.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A glass-ceramic material comprising:
an amorphous phase comprising glass; and,
a crystalline phase comprising diopside.

2. The glass-ceramic material of claim 1, wherein:
the glass comprises greater than 10 weight % sodium oxide; and/or,
the glass comprises greater than 10 weight % potassium oxide; and/or,
the crystals forming the crystalline phase are embedded within the glass.

3. The glass-ceramic material of claim 1 or claim 2, wherein the glass-ceramic material consists of:
an amorphous phase comprising (or consisting of) glass (optionally, wherein the amorphous phase makes up: from 20 to 58 weight %; or, from 40 to 49 weight %, of the glass-ceramic material);
a crystalline phase comprising (or consisting of) diopside (optionally, wherein the crystalline phase makes up: from 42 to 80 weight %; or, from 51 to 60 weight %, of the glass-ceramic material); and
unavoidable impurities.

4. The glass-ceramic material of any one of claims 1 to 3, wherein the amorphous phase consists of glass (and optionally unavoidable impurities).

5. The glass-ceramic material of any one of claims 1 to 4, wherein the crystalline phase consists of diopside (and optionally unavoidable impurities).

6. The glass-ceramic material of any one of claims 3 to 5, wherein the unavoidable impurities comprise or consist of quartz, cristobalite, or quartz and cristobalite at less than 3.0 weight %, or at less than 2.5 weight %, or at less than 2.0 weight %, or at less than 1.5 weight %, or at less than 1.0 weight %, or at less than 0.5 weight %.

7. The glass-ceramic material of any one of claims 1 to 6, wherein the glass-ceramic material is white or near white in colour; optionally, wherein the glass-ceramic material has the CIELAB colorimetric parameters: from 92 to 100 (L); from -0.5 to +0.5 (a); from +0.4 to +3.0 (b); optionally, wherein the CIELAB colorimetric properties are measured on a HunterLab^{™} Miniscan XE Plus.

8. The glass-ceramic material of any one of claims 1 to 7, wherein the glass-ceramic material has an intraparticle porosity of: zero or more; or, greater than 1%; or, greater than 2%; or, from 2% to 15%; or from 4% to 15%; or from 4% to 10%.

9. The glass-ceramic material of any one of claims 1 to 8, wherein the glass-ceramic material:
has a particle size distribution with a minimum particle size of 100 µm and a maximum particle size of 500 µm (in the form of a grit); and/or,
has a particle size distribution with a maximum particle size of 45 µm (in the form of a flour).

10. A synthetic stone comprising the glass-ceramic material of any one of claims 1 to 9; optionally, wherein the synthetic stone further comprises a resin; optionally, wherein synthetic stone comprises 80 to 92 weight % glass-ceramic material and 8 to 20 weight % resin; optionally, wherein the resin is an epoxy resin, a polyester resin or a polyurethane resin; optionally, wherein the resin is a 2K epoxy resin.

11. The synthetic stone of claim 10, wherein the synthetic stone is white or near white in colour; optionally, wherein the glass-ceramic material has the CIELAB colorimetric parameters: from 92 to 100 (L); from -0.5 to +0.5 (a); from +0.4 to +3.0 (b); optionally, wherein the CIELAB colorimetric properties are measured on a HunterLab^{™} Miniscan XE Plus.

12. A paint composition; or, an ink composition; or, a filtration medium; or, a ceramic composition; or, a dental composition; or, a biomedical composition; or, an implant material; or, a fuel cell; or a nuclear waste immobilization composition; comprising the glass-ceramic material of any one of claims 1 to 9.

13. A method of forming a glass-ceramic material, comprising the following steps:
providing dolomite, quartz (or cristobalite, or quartz and cristobalite) and feldspar (optionally sodium feldspar) to form a mixture; and,
heating the mixture to a temperature of from 1100 to 1400 °C.

14. The method of claim 13, further comprising the step of adding sodium silicate to the mixture before heating.

15. The method of claim 13 or claim 14, wherein each starting material is present in the following amounts: dolomite from 25 to 60 weight %, quartz (or cristobalite, or quartz and cristobalite) from 10 to 30 weight %; and, sodium feldspar from 20 to 55 weight %; optionally, sodium silicate from 2.5 to 15 weight %;
wherein each starting material is present in the following amounts: dolomite 40 weight % ± 10 weight %, quartz (or cristobalite, or quartz and cristobalite) 19 weight % ± 10 weight %; and, sodium feldspar 40 weight % ± 10 weight %; optionally, sodium silicate 10 weight % ± 5 weight %.

16. The method of any one of claims 13 to 15, wherein the heating step occurs for from 50 to 70 minutes; or, from 60 minutes to 600 minutes.

17. A glass-ceramic material obtained by, or obtainable by, the method of any one of claims 13 to 16.
